# EUROPEAN PATENT APPLICATION

(11) **EP 3 517 587 A1**
(43) Date of publication of application: **31.07.2019**
(21) Application number: 19153557.4
(22) Date of filing: 24.01.2019
(51) Int. Cl.: C09J 7/20, C09D 11/00, F16L 11/00, B05D 5/06, G01N 19/08, G01N 21/33, G01N 21/64, C09J 9/00, C09J 11/02, C09J 7/00, C09J 7/30, H01R 13/639

(54) **DISCLOSING MOVEMENT**

(30) Priority: 29.01.2018 IN 201841003320
(71) Applicant: Airbus Operations (S.A.S.), Bristol BS34 7PA (GB)
(72) Inventor: Selvan, Arumugam, Bristol, BS34 7PA (GB); Hatti, Prakash, Bristol, BS34 7PA (GB)
(74) Representative: Hucker, Nerys

(57) **Abstract**

A medium such as an ink or sealant (2) for disclosing movement is provided. Also provided are a tape (9) having the medium (12) applied to it, and a method of disclosing movement of one or more elements (4, 5, 14). The medium is applicable as a settable liquid or paste (2) to components, such as a nut and bolt (4, 5) or a flexible hydraulic hose (14), for which untightening or kinking movement is to be detected. The medium (2) has an appearance, eg., colour, and contains distributed microspheres (3) containing a second liquid having a different, usually much brighter, appearance. Once the medium (2) is set, unwanted movement, such as untightening of the nut (4) or kinking of the hose (14), will fracture the microspheres (3) and the second liquid will be released to transform the appearance of the medium (2) and alert an observer.

## Description

### FIELD OF THE INVENTION

The present invention relates to the disclosure of unwanted relative movement between elements or unwanted movement of a single element, for example torque loosening of a nut and bolt, in service, or kinking of flexible hydraulic hoses.

### BACKGROUND TO THE INVENTION

It is well known to paint a line of marking ink or sealant across a tightened nut and bolt in order to provide warning of unwanted loosening of the nut. If loosening occurs, for example due to vibration or to tampering, the painted lines will no longer line up and this will give a warning to an observer or inspector that remedial action needs to be taken, such as re-tightening the nut or investigating the cause of its loosening. Such marking lines may be used in other similar circumstances wherever components are fastened together, for example, when a line is painted across a nut and a component secured by the nut.

This technique is particularly suitable for components fastened together with threaded fasteners but it can be used for any combination of components where unwanted movement may not be detected without aligned marks on the components.

The technique works relatively well. However, sometimes slight angular movement of a line of paint or marking ink can pass unnoticed, during inspection, and unwanted loosening of a fastener can result. This may occur, for example if the components have become dirty with use or are located in a poorly lit area. The difficulty in accurately assessing whether a fastening has come loose may lead to the necessity for further inspection, which can be expensive. In some circumstances it will be appreciated that such unwanted loosening can also be dangerous, for example when a vehicle wheel nut loosens.

A further example of circumstances in which unwanted movement may cause inconvenience, disruption or danger is in the kinking of a flexible hose, such as a braided hydraulic hose, after a period of use. On aircraft, for example, flexible hoses are inspected for damage as specified by a maintenance manual. A complete inspection includes consideration of age, cure date and stiffness of the hose and an operational check of all related subsystems. Such inspection can be tricky and sometimes tedious and minor kinking of a hose may not be detected, leading to possible later failure or leakage.

It is an object of the invention to provide enhanced visibility of such loosening of fasteners or kinking of hoses or other unwanted movement.

### SUMMARY OF THE INVENTION

According to a first aspect of the invention, there is provided a medium for disclosing movement, the medium being applicable as a settable first liquid or paste to one or more elements for which movement is to be detected, the medium having a first appearance and containing distributed containers of a second liquid of a second appearance, the arrangement being such that once the medium is set said containers are adapted to fracture upon said movement whereby to release said second liquid and transform the appearance of the medium. Thus, small rotations of a nut on a thread, for example, may be made far more apparent and visible to an observer. Prior art indications given by aligned marks on the nut and thread are supplemented or replaced by a far more visible splash of a different appearance or colour of the second liquid.

The medium may conveniently comprise an ink, a sealant or a marking sealant. The medium of the invention may therefore be conveniently applied as a liquid or paste.

The containers may comprise microspheres which may be of diameter between 1 and 10µm.

The microspheres may be constructed of any suitable generally brittle material which may be selected from the group silica, polymer and ceramic.

The concentration of the microspheres within the medium may be in a range of 0.15% to 3% by weight to allow convenient application of the medium combined with sufficient contrast between the first and second appearances.

A fracture strength of the microspheres may be set to a level less than or equal to an elastic strength of the medium. Thus, when the medium is stretched to the point of fracture by unwanted movement of the element or elements, the microspheres will themselves fracture and give a clear indication of the unwanted movement.

At least one of the first and second appearances may comprise a selected colour. The first and second appearances may both be colours and the selected first colour may contrast sharply with a second said colour in order to give a clear indication of movement to a user.

The second appearance may be visible in the ultra-violet radiation range or may be phosphorescent for added visibility.

According to a second aspect of the invention there is provided a tape having applied thereto a medium according to the first aspect.

The medium may be carried on the tape in combination with an adhesive and the medium and the adhesive may be applied to a single surface of the tape, for example with the medium being alternated with the adhesive, lengthwise of the tape. The tape may include a carrier layer and a reinforcement layer in addition to the frangible layer and adhesive layer. The layers may be laid out in any suitable distribution for the purpose in hand.

The strength of the tape or adhesive may be adjusted to a figure corresponding to an expected loading on the tape during use, whereby above the expected loading, the adhesive may de-bond and transfer load to the medium and fracture/rupture the containers. Thus, with the tape applied to a flexible hydraulic hose, for example, the expected loading may be balanced with expected hose movement such that movement beyond that normally expected in use will coincide with fracture of the containers and release of the second liquid.

The intent is to make the tape as practical as possible, bearing in mind that false alerts may occur if the medium/frangible layer breaks in a manner for which is not designed. The frangible layer should break and release the colour only upon the application of a certain predetermined force.

Specifically therefore, predetermined stresses or forces can be established and classified as indicative of substantial damage, eg, hose kinking or stretching. Tape construction and adhesive strength can be designed, using experimentation as necessary, to achieve varying levels of peel strength, tear strength, bend-radii of hose, etc, as desired. These varying levels can be applied specifically to the tape carrier material and/or to the frangible layer. The tape and frangible layer can thus be engineered for the microspheres to fracture only upon achieving this predetermined stress.

According to a third aspect of the invention there is provided a combination of one or more elements for which movement is to be disclosed and a medium according to the first aspect.

According to a fourth aspect of the invention there is provided a combination of one or more elements for which movement is to be disclosed and a tape according to the second aspect.

According to a fifth aspect of the invention there is provided a method of disclosing movement of one or more elements, the method including the steps of applying a medium according to the first aspect to the one or more elements for which movement is to be detected and observing the set medium as required, to detect the said movement.

The step of applying the medium may include applying the medium as a said first liquid or paste to a joint region of two components, for which relative said movement is to be disclosed, and causing or allowing the medium to set. Thus, unwanted unscrewing of threaded fasteners, for example, will become more easily detectable, with the invention.

According to a sixth aspect of the invention there is provided a method of disclosing movement of a flexible hose, the method including the steps of applying a tape according to the second aspect to an outer surface of the hose and observing the tape as required to detect the said movement. Thus, unwanted distortion of the hose such as kinking due to fasteners or guides coming loose may be more easily detected.

### BRIEF DESCRIPTION OF THE DRAWINGS

The invention will now be described, by way of example only, with reference to the following drawings in which:-
Figure 1 schematically shows existing sealant or marking ink;
Figure 2 shows the sealant or marking ink of Figure 1 with microspheres according to the invention included;
Figure 3a is a schematic side view of a nut and threaded fastener with conventional marking ink or sealant applied;
Figure 3b shows the threaded fastener of Figure 3a with the nut rotated;
Figure 3c shows the arrangement of Figure 3b with medium according to the invention applied and microspheres fractured;
Figure 4 shows a flexible hose, kinked;
Figure 5a schematically shows an upper surface of a tape according to the invention;
Figure 5b shows a lower surface of the tape of Figure 5a, and
Figure 5c shows one edge of the tape of Figure 5a.

### DETAILED DESCRIPTION OF THE INVENTION

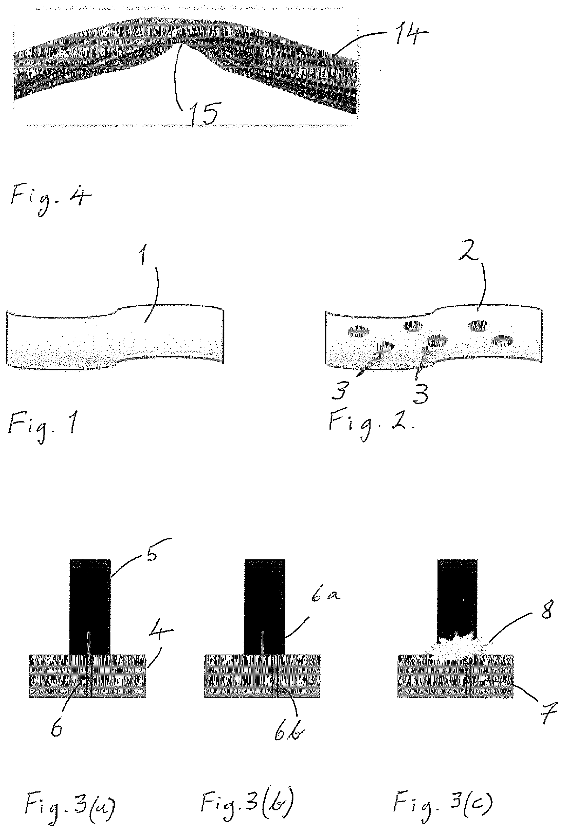

Figure 1 shows schematically a strip 1 of existing sealant or marking ink. Such sealant or marking ink is often applied as a thin strip across a junction between two relatively movable components such as a nut and bolt or nut and component secured by the nut.

Figure 2 shows a strip of sealant 2, according to the invention, having dispersed therein microspheres 3 containing a second liquid of which the appearance is highly contrasting with that of the sealant 2.

Figure 3(a) shows a nut 4 tightened onto a threaded stud or bolt 5. Applied to both nut and bolt 4, 5 is a line of marking ink 6 according to the prior art. Figure 3(b) shows the arrangement of Figure 3(a) but with the nut 4 slightly loosened. The line of marking ink 6 has now been divided into an upper line 6a, on the bolt 5 and a lower line 6b on the nut 4. It will be observed that the lines 6a, 6b no longer line up with each other, thereby giving a warning to an inspector that the nut 4 needs re-tightening. The misalignment of lines 6a and 6b is not, however, very striking to the eye and could be missed in dirty conditions or conditions of difficult light or by an inattentive observer. This could lead to the dangerous situation where the nut could further slacken off, before further inspection, to a potentially dangerous extent.

Figure 3(c) shows the nut 4 and bolt 5 in the same relative positions as in Figure 3(b). However, the known marking ink 6 has been replaced by marking ink 7 according to the invention. Marking ink 7 contains microspheres (not separately shown in Figure 3(c)) and the relative twisting of the nut and bolt 4, 5 has caused the hardened/set ink 7 to fracture microspheres contained within the ink. This fracturing has released a phosphorescent second liquid contained within the microspheres which has caused a splash of colour 8 in high contrast to the appearance of the marking ink 7. This splash of colour 8 is far more easily visible to an observer than misaligned line markings and is therefore less likely to be missed, upon inspection or even casual observation.

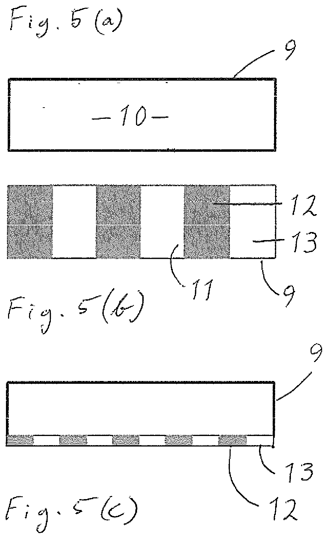

Figures 5(a), (b) and (c) show alternative views of a tape 9 according to the invention. Figure 5(a) shows an upper surface 10 of material of the tape 9, Figure 5(b) shows a lower attachment surface 11 of the tape 9, and Figure 5(c) shows (not to scale) a side view of the tape 9. The attachment surface 11 of the tape, as shown in Figure 5(b), shows medium, or frangible layer, 12, according to the invention, alternated lengthwise of the tape with adhesive 13. This alternating sequence is also shown in Figure 5(c).

In use, the attachment surface 11 of the tape 9 is applied to a component whose movement is to be monitored, such as a flexible hose 14, as shown in Figure 4. The hose 14 is shown kinked at 15, by way of example, but of course the tape 9 would be applied to an unkinked hose, in practice. The tape 9 may be applied in any desired manner to the hose, for which data for burst of microspheres has been obtained. In practice, the tape may be fairly tightly wound around the hose 14. In this way, any unwanted movement, eg, kinking movement, of the hose 14 will tend to distort the tape 14 and cause microspheres in the medium 12 to burst, as described in relation to Figure 3(c), giving rise to a splash of colour visible at a break or at extremities of the tape in a similar way. However, the manner of winding or applying the tape will vary with the particular application. In certain circumstances, for example, unwanted stretching of the hose or pipe may be detected by applying the tape lengthwise of the hose or pipe.

The embodiments described herein are respective non-limiting examples of how the present invention and aspects of the present invention may be implemented. Any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined by the accompanying claims.

The word "or" as used herein is to be taken to mean "and/or" unless explicitly stated otherwise.

## Claims

1. A medium for disclosing movement, the medium being applicable as a settable first liquid or paste to one or more elements for which movement is to be detected, the medium having a first appearance and containing distributed containers of a second liquid of a second appearance, the arrangement being such that once the medium is set said containers are adapted to fracture upon said movement whereby to release said second liquid and transform the appearance of the medium.

2. A medium according to claim 1, in which the containers comprise microspheres.

3. A medium according to claim 2, in which the microspheres are constructed from a material selected from the group silica, polymer and ceramic.

4. A medium according to claim 2 or 3, in which the concentration of the microspheres within the medium is in a range of 0.15% to 3% by weight.

5. A medium according to any of claims 2 to 4, in which a fracture strength of the microspheres is set to a level less than or equal to an elastic strength of the medium.

6. A medium according to any preceding claim, in which the first and second appearances are both colours and the selected first colour contrasts sharply with a second said colour.

7. A medium according to any preceding claim, in which the second appearance is visible in the ultra-violet radiation range.

8. A medium according to any preceding claim, in which the second appearance is phosphorescent.

9. A tape having applied thereto a medium according to any of claims 1 to 10 in combination with an adhesive.

10. A tape according to claim 9, in which strength of the tape or adhesive is adjusted to an expected loading on the tape during use, whereby above the expected loading, the adhesive will de-bond and transfer load to the medium and fracture the containers.

11. A combination of one or more elements for which movement is to be disclosed and a medium according to any of claims 1 to 8, or a tape according to claim 9 or 10.

12. A method of disclosing movement of one or more elements, the method including the steps of applying a medium according to any of claims 1 to 8 to the one or more elements for which movement is to be detected and observing the set medium as required, to detect the said movement.

13. A method according to claim 12, in which the step of applying the medium includes applying the medium as a said first liquid or paste to a joint region of two components, for which relative said movement is to be disclosed, and causing or allowing the medium to set.

14. A method according to claim 12, of disclosing movement of a flexible hose, the method including the steps of applying a tape according to any of claims 9 or 10 to an outer surface of the hose and observing the tape as required to detect the said movement.
